# EUROPEAN PATENT APPLICATION

(11) **EP 4 852 513 A1**
(43) Date of publication of application: **09.12.2026**
(21) Application number: 24926066.2
(22) Date of filing: 20.02.2024
(51) Int. Cl.: H04W 28/12, H04W 72/52

(54) **CONTROL SYSTEM AND CONTROL METHOD**

(71) Applicant: Softbank Corp., Tokyo 105-7529 (JP)
(72) Inventor: SAI, Jutatsu, Tokyo 105-7529 (JP)
(74) Representative: Meissner Bolte Partnerschaft mbB
(86) International application number: PCT/JP2024/005896
(87) International publication number: WO 2025/177395

(57) **Abstract**

A server (10) predicts a future traffic state in a specific time period and a specific area based on predetermined information, and transmits information indicating a prediction result to at least one first base station among a plurality of base stations (30-1 to 30-3) located in an area where traffic is predicted to increase in the specific time period.

## Description

### Technical Field

The present invention relates to a control system and a control method.

### Background Art

Services of a fifth-generation mobile communication system (5G) capable of realizing high speed and large capacity have been launched. Since traffic increases as 5G becomes widely available, it is required to effectively utilize limited radio resources. Patent Literature 1 discloses a base station (secondary communication permission node) for controlling traffic that refers to a user traffic history and similar data in order to give permission for secondary use during time periods or in locations with many idle channels, thereby opening some of the idle channels and effectively utilizing the frequency band.

### Citation List

### [Patent Literature]

[Patent Literature 1]
Japanese Patent Application Publication Tokukai No. 2010-206780

### Summary of Invention

### Technical Problem

Traffic may temporarily increase rapidly due to a sudden occurrence such as a sudden change in weather, a train delay, or a large-scale event. Rapid increase in traffic will strain radio resources, which may degrade communication quality for users. However, Patent Literature 1 does not mention predicting how a traffic state will change in the future and utilizing a prediction result, and there is room for improvement.

### Solution to Problem

In order to solve this problem, a control system in accordance with an aspect of the present invention is a control system including: a control device; and a plurality of base stations communicable with the control device, wherein the control device is configured to: predict a future traffic state in a specific time period and a specific area based on predetermined information; and transmit information indicating a prediction result to at least one first base station among the plurality of base stations that are located in an area where traffic is predicted to increase in the specific time period, and the first base station is configured to: calculate, based on the information indicating the prediction result, a radio resource necessary for the traffic predicted to increase; determine a policy for securing the radio resource; and execute the policy in cooperation with the remaining base station or stations.

In order to solve the problem, a control method in accordance with an aspect of the present invention is a control method executed by a control device and at least one first base station among a plurality of base stations communicable with the control device, the method including: a prediction step of predicting, by the control device, a future traffic state in a specific time period and a specific area based on predetermined information; and a transmission step of transmitting, by the control device, information indicating a prediction result to the at least one first base station among the plurality of base stations that are located in an area where traffic is predicted to increase in the specific time period, and the method further including: a calculation step of calculating, by the first base station, based on the information indicating the prediction result, a radio resource necessary for the traffic predicted to increase; a determination step of determining, by the first base station, a policy for securing the radio resource; and an execution step of executing, by the first base station, the policy in cooperation with the remaining base station or stations.

### Advantageous Effects of Invention

Performing cooperative control by a plurality of base stations based on a future traffic state and securing a necessary radio resource prevent radio resources from being strained even when traffic increases rapidly, and thus prevent communication quality of a user from deteriorating.

### Brief Description of Drawings

Fig. 1 is a diagram illustrating a configuration example of a radio communication system in accordance with an embodiment of the present invention.
Fig. 2 is a diagram illustrating an example of functional blocks of a server in accordance with an embodiment of the present invention.
Fig. 3 is a diagram illustrating an example of functional blocks of a base station in accordance with an embodiment of the present invention.
Fig. 4 is a sequence chart illustrating an example of processing executed by a server and a base station in accordance with an embodiment of the present invention.
Fig. 5 is a block diagram illustrating a configuration of a computer usable as a server, a base station, or the like.

### Description of Embodiments

The following description will discuss embodiments of the present invention in detail with reference to the drawings. The same parts in the drawings are denoted by the same reference numerals, and the description thereof will be omitted.

### (Configuration of radio communication system)

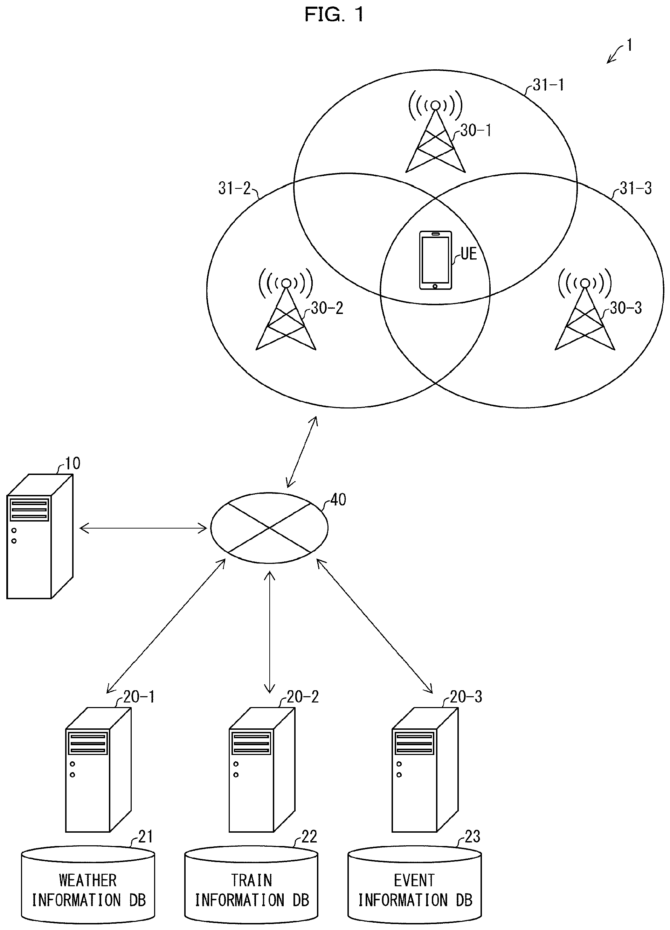

Fig. 1 is a diagram illustrating a configuration example of a radio communication system 1 in accordance with the present embodiment.

As illustrated in Fig. 1, the radio communication system 1 has a configuration which includes a server 10, devices 20-1 to 20-3, base stations 30-1 to 30-3, and a user equipment (UE). The radio communication system 1 is assumed to be applied to a 5G network, but is not limited thereto. For example, the radio communication system 1 may be applied to a future network succeeding the 5G network, may be applied to a 4G network, or may be applied to a legacy network prior to the 4G network.

Each of the base stations 30-1 to 30-3 communicates with the user equipment UE located inside cells 31-1 to 31-3 which are radio communication areas.

In Fig. 1, three base stations 30-1 to 30-3 and one user equipment UE are illustrated for simplicity, but the number of base stations connected to a core network 40 is not limited to three, and may be two, or may be four or more. Further, the number of user equipments UE connected to each of the base stations 30-1 to 30-3 may be two or more.

In the example of Fig. 1, the cell 31-1 corresponding to the base station 30-1, the cell 31-2 corresponding to the base station 30-2, and the cell 31-3 corresponding to the base station 30-3 partially overlap with each other, and the user equipment UE is located in this overlapping part. Therefore, the user equipment UE may be connected to the base station 30-1, may be connected to the base station 30-2, or may be connected to the base station 30-3. Further, the user equipment UE may be connected to these base stations either by wire or wirelessly. Further, the user equipment UE may be connected to a single frequency network (SFN) cell. The SFN cell is a kind of cell arrangement of radio communication, and is a form of a cell in which a plurality of base stations (here, the base stations 30-1 to 30-3) simultaneously provide services at the same frequency. The SFN cell enables different base stations using the same frequency to cooperate with each other to secure signal consistency and improve communication coverage or quality.

The user equipment UE is illustrated as a smartphone portable by a user in Fig. 1, but this is an example and the user equipment UE is not limited to a smartphone. For example, the user equipment UE may be a tablet terminal, a smart watch, a mobile phone, or the like. Further, the user equipment UE may be an electronic device or the like mounted on a vehicle.

The server 10, the devices 20-1 to 20-3, and the base stations 30-1 to 30-3 are connected to be communicable with each other via the core network 40.

The core network 40 is a network having functions such as a user plane function (UPF), a network exposure function (NEF), a policy control function (PCF), an access and mobility management function (AMF), and a session management function (SMF), in which establishment of a user session, transfer processing of user data, or the like is performed.

The server 10 is constituted by a general-purpose computer, and may include a processor that executes a program, a memory that stores a program and/or data, an auxiliary storage device (such as an HDD and an SSD), and a network interface.

The device 20-1 may be a web server that provides information pertaining to weather. Such a device 20-1 may be constituted by a general-purpose computer including a processor that executes a program, a memory that stores a program and/or data, an auxiliary storage device, and a network interface. Further, the device 20-1 may include a weather information database 21. Various types of information pertaining to weather are stored in the weather information database 21. Such a weather information database 21 may be a database possessed by the Japan Meteorological Agency, which is a public institution of Japan, or may be a database possessed by a private company. The weather information database 21 may be a database possessed by a public institution or a private company of a country to which the user belongs. The "information pertaining to weather" includes, as an example, information on a weather forecast.

The device 20-2 may be a web server that provides information pertaining to trains. The device 20-2 may be constituted by a general-purpose computer similarly to the device 20-1. Further, the device 20-2 may include a train information database 22. Various types of information pertaining to trains are stored in the train information database 22. Such a train information database 22 may be a database possessed by a railway operator of a country to which the user belongs. The "information pertaining to trains" includes, as an example, delay information of a train.

The device 20-3 may be a web server that provides information pertaining to events. The device 20-3 may be constituted by a general-purpose computer similarly to the device 20-1. Further, the device 20-3 may include an event information database 23. Various types of information pertaining to events are stored in the event information database 23. Such an event information database 23 may be a database possessed by a local government which is a public institution of Japan, or may be a database possessed by a private company. The event information database 23 may be a database possessed by a public institution or a private company of a country to which the user belongs. The "information pertaining to events" includes, as an example, information on a fireworks display, cherry blossom viewing, a festival, a live music performance, and the like.

### (Functional blocks of server)

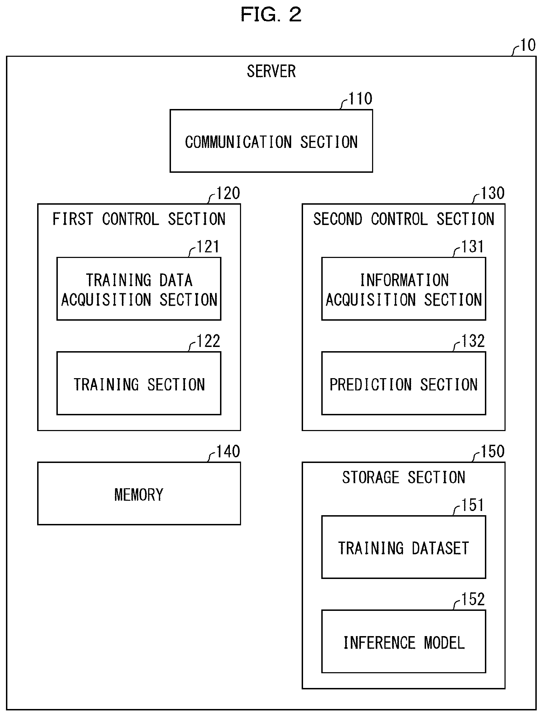

Fig. 2 is a diagram illustrating an example of functional blocks of the server 10 in accordance with the present embodiment.

The server 10 includes a communication section 110, a first control section 120, a second control section 130, a memory 140, and a storage section 150.

The communication section 110 communicates with the devices 20-1 to 20-3 and the base stations 30-1 to 30-3 via the core network 40.

The memory 140 temporarily stores various programs executed by the first control section 120 and the second control section 130 and various data referred to by the programs.

The storage section 150 stores information read, written, referred to, and the like by the first control section 120 and the second control section 130. As an example, the storage section 150 stores a training dataset 151 and an inference model 152.

The training dataset 151 is a dataset including training data (labeled data used in machine learning). Machine learning is a method of learning features included in input data and generating a "model" that predicts a result corresponding to newly input data. The inference model 152 is a trained model generated by performing machine learning using the training dataset 151.

The inference model 152 is a model that uses, for example, information pertaining to weather as input data, and predicts when and where traffic will increase in the future based on the information pertaining to weather. A prediction result by the inference model 152 is notified to a corresponding base station (for example, the base stations 30-1 to 30-3), and is used for radio resource calculation or policy determination. Details of this point will be described later.

An example of a relationship between weather and traffic will be described. It is known that when it is raining, the number of users who do not go out increases, and the use of the Internet tends to increase. Here, a weather forecast is information indicating future weather at a specific time and a specific place. In other words, past weather information is information indicating weather at a specific time and a specific place in the past. Preparing a dataset linking past weather information and traffic and performing learning using the dataset make it possible to generate the inference model 152 that predicts when and where traffic will increase in the future based on a weather forecast. As for the past weather information, the server 10 can access the weather information database 21 to obtain the past weather information.

The training dataset 151 includes training data used for machine learning of the inference model 152. The training data included in the training dataset 151 is data in which a value to be output by the inference model 152 is associated as ground truth data with input data input to the inference model 152. The input data may also be referred to as an explanatory variable, and the ground truth data may also be referred to as a dependent variable.

The inference model 152 predicts when and where traffic will increase in the future based on the information pertaining to weather. Therefore, the training data included in the training dataset 151 is data in which information indicating when and where traffic will increase in the future when the information pertaining to weather is applied is associated as "ground truth data" with "input data" indicating the information pertaining to weather.

Such training data is generated by associating the input data with the ground truth data, and is stored in the storage section 150 as the training dataset 151.

The first control section 120 includes a training data acquisition section 121 and a training section 122.

The training data acquisition section 121 refers to the storage section 150 to acquire the training dataset 151 when generating the inference model 152. The training data acquisition section 121 outputs the acquired training dataset 151 to the training section 122.

By machine learning using the training dataset 151 acquired from the training data acquisition section 121, the training section 122 generates the inference model 152 for predicting when and where traffic will increase in the future based on the information pertaining to weather. The inference model 152 is an arithmetic model that uses the information pertaining to weather as an explanatory variable and information indicating when and where traffic will increase in the future as a dependent variable. An algorithm of the machine learning is not particularly limited. For example, the training section 122 may generate the inference model 152 using a neural network, or may generate the inference model 152 using regression analysis, a random forest, or the like.

The inference model 152 generated by the training section 122 is stored in the storage section 150.

Although the information pertaining to weather has been described as an example of input data of the inference model 152, the input data is not limited thereto. The input data of the inference model 152 may be information pertaining to trains (delay information of a train). Here, an example of a relationship between a train delay and traffic will be described. When a train stops between stations, it is conceivable that traffic in an area where the train has stopped increases in an attempt by passengers to communicate the stop. Thus, a dataset linking past train delay information and traffic may be prepared, and the training section 122 may be caused to perform training using the dataset. This enables the training section 122 to generate the inference model 152 that predicts when and where traffic will increase in the future based on current train delay information.

Further, the input data of the inference model 152 may be information pertaining to events. Here, an example of a relationship between an event and traffic will be described. If an event such as a fireworks display, cherry blossom viewing, a festival, or a live music performance attracts many users, it is conceivable that the users concentrate on a place where the event is held and traffic increases. Thus, a dataset linking past event information and traffic may be prepared, and the training section 122 may be caused to perform training using the dataset. This enables the training section 122 to generate the inference model 152 that predicts when and where traffic will increase in the future based on the event information.

From the above, the input data of the inference model 152 may be at least one of the information pertaining to weather, the information pertaining to trains, and the information pertaining to events. The input data of the inference model 152 may include all of the information pertaining to weather, the information pertaining to trains, and the information pertaining to events, or may include information of any combination thereof. In the following, unless otherwise specified, the input data of the inference model 152 will be described as the information pertaining to weather (information on a weather forecast).

The second control section 130 includes an information acquisition section 131 and a prediction section 132.

The information acquisition section 131 accesses the device 20-1 to acquire the information on a weather forecast when predicting when and where traffic will increase in the future. The information acquisition section 131 outputs the acquired information on a weather forecast to the prediction section 132.

The prediction section 132 predicts when and where traffic will increase in the future by inputting the information on a weather forecast acquired by the information acquisition section 131 to the inference model 152. Here, it is assumed that the acquired weather forecast predicts heavy rain in an area (the cells 31-1 to 31-3) covered by the base stations 30-1 to 30-3 between 6:00 and 18:00 tomorrow. In this case, the prediction section 132 predicts that traffic will increase in the area covered by the base stations 30-1 to 30-3 between 6:00 and 18:00 tomorrow. The communication section 110 notifies the base stations 30-1 to 30-3 located in the area where traffic is predicted to increase of the predicted increase in traffic. That is, the communication section 110 transmits information indicating a prediction result obtained by the prediction section 132 to each of the base stations 30-1 to 30-3.

The first control section 120 and the second control section 130 may be configured as a RAN intelligent controller (RIC). The RIC is a controller that manages and controls nodes such as a radio unit (RU), a distributed unit (DU), and a centralized unit (CU) constituting a 5G RAN, and software on devices.

### (Functional blocks of base station)

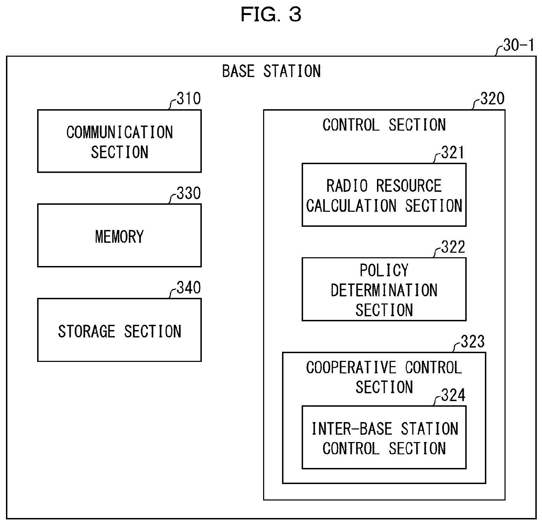

Fig. 3 is a diagram illustrating an example of functional blocks of the base station 30-1 in accordance with the present embodiment. Although illustration of the base stations 30-2 and 30-3 is omitted, the base stations 30-2 and 30-3 have the same functions as the base station 30-1.

The base station 30-1 includes a communication section 310, a control section 320, a memory 330, and a storage section 340.

The communication section 310 communicates with the user equipment UE located inside the cell 31-1, and communicates with the server 10 or the devices 20-1 to 20-3 via the core network 40. In the present embodiment, the communication section 310 receives information indicating a prediction result obtained by the prediction section 132, the information being transmitted from the communication section 110 of the server 10. This enables the base station 30-1 to recognize that traffic will increase in an area (the cell 31-1) covered by the base station 30-1 between 6:00 and 18:00 tomorrow.

The memory 330 temporarily stores various programs executed by the control section 320 and various data referred to by the programs.

The storage section 340 stores information read, written, referred to, and the like by the control section 320.

The control section 320 includes a radio resource calculation section 321, a policy determination section 322, and a cooperative control section 323.

The radio resource calculation section 321 calculates a necessary radio resource in a time period in which traffic is predicted to increase. The radio resource calculation section 321 outputs the calculated radio resource to the policy determination section 322.

The policy determination section 322 determines a policy for securing the radio resource calculated by the radio resource calculation section 321. The policy here includes cooperative control between base stations, and examples thereof include (1) beamforming control of massive multiple input, multiple output (Massive MIMO), (2) cancellation of an SFN cell, and (3) load balancing between base stations. The policy determination section 322 may determine any one policy from the above (1) to (3) or may determine to use all three policies, in accordance with the radio resource to be secured. Further, the policy determination section 322 may determine a policy other than the above (1) to (3). The policy determination section 322 outputs the determined policy to the cooperative control section 323.

The cooperative control section 323 executes the policy for securing the radio resource in cooperation with the remaining base stations 30-2 and 30-3 based on the policy determined by the policy determination section 322. As a function of executing such a policy, the cooperative control section 323 may include an inter-base station communication control section 324. The inter-base station communication control section 324 may have a function of executing the policies of the above (1) to (3). The policies of the above (1) to (3) will be described below.

Regarding the beamforming control of Massive MIMO of the above (1), for example, the respective base stations 30-1 to 30-3 cooperate to set a beamforming weight (such as MRT or ZF) toward a high traffic point where traffic is predicted to increase, which makes it possible to improve spectral efficiency and significantly increase communication capacity. This can prevent occurrence of a communication delay or disconnection at the time of high traffic. Note that, among the plurality of base stations 30-1 to 30-3, for example, only the base station 30-1 may execute the beamforming control of Massive MIMO.

Regarding the cancellation of an SFN cell of the above (2), for example, the respective base stations 30-1 to 30-3 may cooperate to cancel the SFN cell and change frequency allocation or the like. This makes it possible to secure a radio resource even when traffic increases.

Regarding the load balancing between base stations of the above (3), for example, the respective base stations 30-1 to 30-3 may cooperate to perform load balancing and evenly distribute traffic or a load among the base stations. This prevents an excessive load from being applied to a specific base station or frequency bandwidth, and makes it possible to secure a radio resource even when traffic increases.

Note that the cooperative control pertaining to the above (1) to (3) may be executed simultaneously or individually.

As described above, in accordance with the present embodiment, performing cooperative control by the plurality of base stations 30-1 to 30-3 based on a future traffic state in a specific time period and securing a necessary radio resource prevent radio resources from being strained even when traffic increases rapidly due to a sudden occurrence such as a sudden change in weather (for example, sudden rain), a train delay, or a large-scale event, and thus prevent communication quality of a user from deteriorating.

### (Flow of processing)

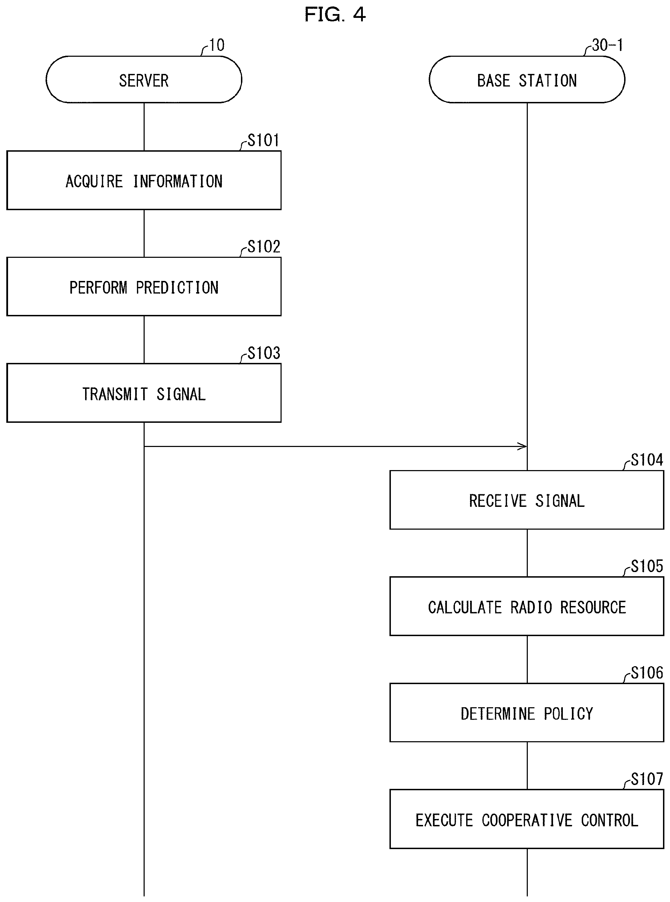

A flow of processing executed by the server 10 and the base stations 30-1 to 30-3 will be described with reference to Fig. 4. Fig. 4 is a sequence chart illustrating an example of processing executed by the server 10 and the base stations 30-1 to 30-3. Note that since the base stations 30-1 to 30-3 have the same functions, Fig. 4 illustrates only the base station 30-1 and omits the base stations 30-2 and 30-3.

In step S101, the information acquisition section 131 of the server 10 accesses the device 20-1 to acquire information on a weather forecast. Note that the information acquisition section 131 of the server 10 may access the device 20-2 to acquire delay information of a train, or may access the device 20-3 to acquire information pertaining to an event. Further, the information acquisition section 131 of the server 10 may access the devices 20-1 to 20-3 to acquire all of the information on a weather forecast, the delay information of a train, and the information pertaining to an event.

The processing proceeds to step S102, and the prediction section 132 of the server 10 predicts when and where traffic will increase in the future by inputting the information on a weather forecast acquired in the processing of step S101 to the inference model 152. Note that the prediction section 132 of the server 10 may predict when and where traffic will increase in the future by inputting the delay information of a train to the inference model 152. Further, the prediction section 132 of the server 10 may predict when and where traffic will increase in the future by inputting the information pertaining to an event to the inference model 152.

The processing proceeds to step S103, and the communication section 110 of the server 10 transmits information indicating a prediction result predicted in step S102 to each of the base stations 30-1 to 30-3. Note that the communication section 110 of the server 10 may transmit the information indicating the prediction result predicted in step S102 only to the base station 30-1, for example.

In step S104, the communication section 310 of each of the base stations 30-1 to 30-3 receives the information indicating the prediction result obtained by the prediction section 132, the information being transmitted from the communication section 110 of the server 10. Note that only the base station 30-1 may receive the information indicating the prediction result obtained by the prediction section 132, the information being transmitted from the communication section 110 of the server 10.

The processing proceeds to step S105, and the radio resource calculation section 321 of each of the base stations 30-1 to 30-3 calculates a necessary radio resource in a time period in which traffic is predicted to increase. Note that only the base station 30-1 may calculate the necessary radio resource in the time period in which traffic is predicted to increase.

The processing proceeds to step S106, and the policy determination section 322 of each of the base stations 30-1 to 30-3 determines a policy for securing the radio resource calculated in the processing of step S105. Note that only the base station 30-1 may determine the policy for securing the radio resource calculated in the processing of step S105.

The processing proceeds to step S107, and the cooperative control section 323 of each of the base stations 30-1 to 30-3 executes the policy for securing the radio resource in cooperation with each base station in accordance with the policy determined in step S106.

As described above, a radio communication system 1 (control system) in accordance with Aspect 1 of the present invention includes the server 10 (control device) and the plurality of base stations 30-1 to 30-3 communicable with the server 10. The server 10 is configured to predict a future traffic state in a specific time period and a specific area based on predetermined information. Further, the server 10 is configured to transmit information indicating a prediction result to at least one base station 30-1 (first base station) among the plurality of base stations 30-1 to 30-3 that are located in an area where traffic is predicted to increase in the specific time period. The base station 30-1 is configured to calculate, based on the information indicating the prediction result, a radio resource necessary for the traffic predicted to increase. Further, the base station 30-1 is configured to determine a policy for securing the radio resource. Then, the base station 30-1 is configured to execute the policy in cooperation with the remaining base stations 30-2 to 30-3.

Further, a server 10 (control device) in accordance with Aspect 2 of the present invention may be configured, in the above Aspect 1, to transmit the information indicating the prediction result to each of the plurality of base stations 30-1 to 30-3 that are located in the area where traffic is predicted to increase in the specific time period. Each of the plurality of base stations 30-1 to 30-3 may be configured to calculate, based on the information indicating the prediction result, a radio resource necessary for the traffic predicted to increase. Further, each of the plurality of base stations 30-1 to 30-3 may be configured to determine a policy for securing the radio resource. Then, each of the plurality of base stations 30-1 to 30-3 may be configured to execute the policy in cooperation with the remaining base stations.

Further, predetermined information in accordance with Aspect 3 of the present invention may include at least one selected from the group consisting of information pertaining to weather, information pertaining to trains, and information pertaining to events, in Aspect 1 or 2.

Further, a policy in accordance with Aspect 4 of the present invention may include at least one selected from the group consisting of beamforming control of Massive MIMO, cancellation of an SFN cell, and load balancing, in any one of Aspects 1 to 3.

Further, a method (control method) in accordance with Aspect 5 of the present invention includes a prediction step (S102) of predicting, by the server 10 (control device), a future traffic state in a specific time period and a specific area based on predetermined information, and a transmission step (S103) of transmitting, by the server 10 (control device), information indicating a prediction result to at least one base station 30-1 (first base station) among the plurality of base stations 30-1 to 30-3 that are located in an area where traffic is predicted to increase in the specific time period. Further, the method (control method) further includes a calculation step (S105) of calculating, by the base station 30-1, a radio resource necessary for the traffic predicted to increase based on the information indicating the prediction result, a determination step (S106) of determining, by the base station 30-1, a policy for securing the radio resource, and an execution step (S107) of executing, by the base station 30-1, the policy in cooperation with the remaining base stations 30-2 to 30-3. Note that the flow of processing in the sequence chart illustrated in Fig. 4 is merely an example, and a step may be deleted or a new step may be added without departing from the scope of the present invention.

### (Hardware configuration and software implementation example)

Control blocks of the server 10, the devices 20-1 to 20-3, the base stations 30-1 to 30-3, and the user equipment UE (particularly, each section and the like included in the first control section 120, the second control section 130, and the control section 320) can be realized by a logic circuit (hardware) provided in an integrated circuit (IC chip) or the like or can be alternatively realized by software as executed by a central processing unit (CPU). In the latter case, the server 10, the devices 20-1 to 20-3, the base stations 30-1 to 30-3, and the user equipment UE may be configured using a computer (electronic calculator). In the following, for convenience of description, the server 10, the devices 20-1 to 20-3, the base stations 30-1 to 30-3, and the user equipment UE are collectively referred to as a "server 10 or the like".

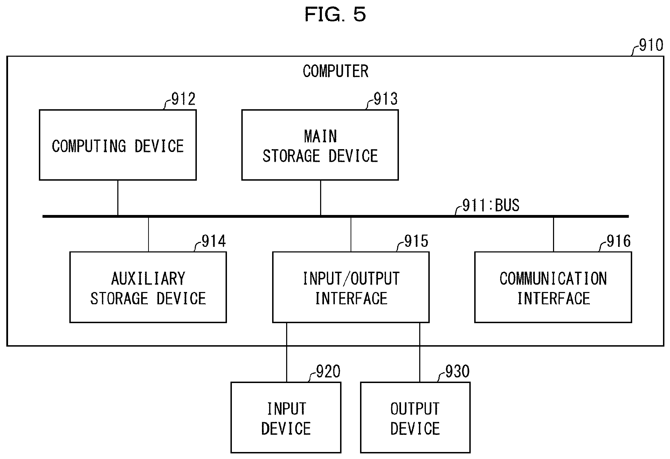

Fig. 5 is a block diagram illustrating an example of a configuration of a computer 910 usable as the server 10 or the like. The computer 910 includes a computing device 912, a main storage device 913, an auxiliary storage device 914, and an input/output interface 915 that are connected to each other via a bus 911. The computing device 912, the main storage device 913, and the auxiliary storage device 914 may be each, for example, a CPU, a random access memory (RAM), a solid-state drive, or a hard disk drive. To the input/output interface 915, an input device 920 via which a user inputs various pieces of information into the computer 910 and an output device 930 via which the computer 910 outputs various pieces of information to the user are connected. The input device 920 and the output device 930 may be embedded in the computer 910 or may be alternatively connected (externally provided) to the computer 910. For example, the input device 920 may be a button, a keyboard, a mouse, a touch sensor, or the like, and the output device 930 may be a lamp, a display, a printer, a speaker, or the like. Alternatively, a device that has functions of both of the input device 920 and the output device 930, such as a touch panel in which a touch sensor and a display are integrated, may be applied. A communication interface 916 is an interface via which the computer 910 communicates with an external device.

In the auxiliary storage device 914, an information processing program for causing the computer 910 to operate as the server 10 or the like is stored. The computing device 912 causes the computer 910 to function as each section included in the server 10 or the like, by loading, on the main storage device 913, the information processing program stored in the auxiliary storage device 914 and executing a command included in the information processing program. Note that a recording medium used by the auxiliary storage device 914 to record information such as the information processing program only needs to be a computer-readable "non-transitory tangible medium", and may be, for example, a tape, a disk, a card, a semiconductor memory, a programmable logic circuit, or the like.

Further, a configuration may be employed in which the computer 910 is caused to function with use of a program recorded in a recording medium outside the computer 910 or a program supplied to the computer 910 via any transmission medium (e.g., a communication network or a broadcast wave). An embodiment of the present invention can also be achieved in the form of a data signal in which the program is embodied via electronic transmission and which is embedded in a carrier wave.

The present invention is not limited to the foregoing embodiments, but may be altered in various ways within the scope of the claims.

### Reference Signs List

- 1: Radio communication system
- 10: Server
- 110: Communication section
- 132: Prediction section
- 30-1, 30-2, 30-3: Base stations
- 321: Radio resource calculation section
- 322: Policy determination section
- 323: Cooperative control section

## Claims

1. A control system comprising: a control device; and a plurality of base stations communicable with the control device, wherein
the control device is configured to:
predict a future traffic state in a specific time period and a specific area based on predetermined information; and
transmit information indicating a prediction result to at least one first base station among the plurality of base stations that are located in an area where traffic is predicted to increase in the specific time period, and
the first base station is configured to:
calculate, based on the information indicating the prediction result, a radio resource necessary for the traffic predicted to increase;
determine a policy for securing the radio resource; and
execute the policy in cooperation with the remaining base station or stations.

2. The control system according to claim 1, wherein
the control device is configured to transmit the information indicating the prediction result to each of the plurality of base stations that are located in the area where traffic is predicted to increase in the specific time period, and
each of the plurality of base stations is configured to:
calculate, based on the information indicating the prediction result, a radio resource necessary for the traffic predicted to increase;
determine a policy for securing the radio resource; and
execute the policy in cooperation with the remaining base station or stations.

3. The control system according to claim 1 or 2, wherein the predetermined information includes at least one selected from the group consisting of information pertaining to weather, information pertaining to trains, and information pertaining to events.

4. The control system according to claim 1 or 2, wherein the policy includes at least one selected from the group consisting of beamforming control of massive multiple input, multiple output (Massive MIMO), cancellation of a single frequency network (SFN) cell, and load balancing.

5. A control method executed by a control device and at least one first base station among a plurality of base stations communicable with the control device,
the method comprising:
a prediction step of predicting, by the control device, a future traffic state in a specific time period and a specific area based on predetermined information; and
a transmission step of transmitting, by the control device, information indicating a prediction result to the at least one first base station among the plurality of base stations that are located in an area where traffic is predicted to increase in the specific time period, and
the method further comprising:
a calculation step of calculating, by the first base station, based on the information indicating the prediction result, a radio resource necessary for the traffic predicted to increase;
a determination step of determining, by the first base station, a policy for securing the radio resource; and
an execution step of executing, by the first base station, the policy in cooperation with the remaining base station or stations.
